# EUROPÄISCHE PATENTSCHRIFT

(11) **EP 2 548 481 B1**
(45) Veröffentlichungstag und Bekanntmachung des Hinweises auf die Patenterteilung: **02.04.2014**
(21) Anmeldenummer: 12175307.3
(22) Anmeldetag: 06.07.2012
(51) Int. Cl.: A47J 31/44, A47J 31/46, A47J 31/60, A47J 31/40

(54) **Getränkeautomat mit einem Getränkeauslauf**
Beverage machine with a beverage disposal
Automate à boissons doté d'une sortie de boissons

(30) Priorität: 21.07.2011 DE 102011079590
(43) Veröffentlichungstag der Anmeldung: 23.01.2013
(73) Patentinhaber: BSH Bosch und Siemens Hausgeräte GmbH, 81739 München (DE)
(72) Erfinder: Koller, Desiree, 84555 Jettenbach (DE); Kramer, Siegmund, 83417 Kirchanschöring (DE); Tracy, Timothy, Mark, 83352 Altenmarkt (DE)

(56) Entgegenhaltungen:
- EP-A1- 2 353 473
- EP-A2- 1 125 536
- WO-A1-2006/015950
- DE-A1- 3 602 665

## Beschreibung

Die Erfindung betrifft einen Getränkeautomaten, insbesondere Kaffeevollautomaten, mit einem Getränkeauslauf nach dem Oberbegriff des Patentanspruchs 1.

Der Konsum von mittels Getränkeautomaten, insbesondere Kaffeevollautomaten erzeugten Getränken, insbesondere Kaffee, erfreut sich immer größerer Beliebtheit im privaten Bereich. Zunehmend werden hierbei auch Kaffee-Mixgetränke hergestellt, beispielsweise unter Zugabe von Milchschaum und/oder weiteren Geschmacksstoffen wie Sirup. Dabei wird das Getränk in der Regel über einen Getränkeauslauf abgegeben.

Der Auslauf kann feststehend an der Gehäusefront angebracht, oder aber höhenverstellbar ausgeführt sein. In jedem Fall Ist der Getränkeauslauf funktionsbedingt ausladend an der Gehäusefront angebracht. Aus der DE 298 10 291 U1 ist ein Getränkeauslauf bekannt, mit dem sich ein Höhenabstand zwischen einem Auslassteil des Getränkeauslaufs und einem Gefäß zur Anpassung an verschieden hohe Auffangbehälter, wie z.B. Espressotassen, einstellen lässt. In einer Betriebsstellung ist das Auslassteil vertikal angeordnet, dergestalt, dass ein Auffangbehälter von oben befüllt werden kann.

Die EP 2 353 473 A1 offenbart eine Getränkezubereitungsmaschine für aromatisierte Getränke mit einer Reinigungsanordnung für den Getränkeauslass. Der Getränkeauslass ist hierfür schwenkbar in Bezug auf die Gerätefront angeordnet. Die WO 2006/015950 A1 offenbart einen Getränkebereiter mit einem Getränkeauslauf, der so veränderbar ist, dass seine Auslauföffnung aus einer ersten Betriebsposition über der Trägerfläche in eine zweite Betriebsposition außerhalb der vertikalen Projektion eines Trägerteils bringbar ist. Ferner offenbaren die EP 1 125 536 A1 und die DE 36 02 665 A1 eine Espresso- bzw. eine Kaffeemaschine mit einem verlänger- und/oder schwenkbaren Kaffeeauslass.

Nach der Herstellung von Kaffee-Mixgetränken mit Milch oder Sirup sind regelmäßige Reinigungszyklen des Getränkeauslaufs und eines milchführenden Leitungssystems zwingend notwendig. Ein Reinigungszyklus, zumindest für die Brühkammer und das stromab der Brühkammer folgende Leitungssystem, erfolgt in der Regel auch immer nach dem Einschalten des Getränkeautomaten, sowie zeitabhängig nach einer bestimmten Standzeit im Standby-Modus vor dem Bezug eines Getränks und gegebenenfalls beim Ausschalten.

Neben einem reinen Spülvorgang mit heißem oder kalten Wasser ist es nach einer vorbestimmten Anzahl von Getränkebezügen auch notwendig, Ablagerungen von fettigen bzw. öligen Bestandteilen aus der Getränkezutat auf den Komponenten bzw. innenseitigen Oberflächen des Getränkeautomaten, insbesondere den Innenflächen der Brühkammer und den stromab der Brühkammer angeordneten Leitungen, Filtern und Ventilen durchzuführen. Ein derartiger Reinigungszyklus erfolgt in der Regel mit einem Reinigungsmittel, das zuvor in die Brühkammer oder in den Milchbehälter zu verbringen ist.

Neben den vorstehend beschriebenen Spül- bzw. Reinigungszyklen ist es, in Abhängigkeit der Wasserhärte und der Anzahl der Getränke und/oder Heißwasser bzw. Dampfbezüge auch notwendig, den Getränkeautomaten zu entkalken. Der Entkalker wird in der Regel über den Frischwassertank zugeführt und nach einer Einwirkzeit mit Wasser ausgespült.

Ein Großteil der Reinigungs- und/oder Spüllösungen wird über das Auslassteil des Getränkeauslaufs und/oder gegebenenfalls über ein weiteres Auslassteil für Wasser, Dampf, Milch und/oder Milchschaum ausgespült. Hierfür wird vorteilhaft ein Auffangbehälter unter den Getränkeauslauf positioniert. Fehlt ein derartiger Behälter werden Reinigungs- und/oder Spüllösungen über das Tropfblech von einer sogenannten Tropf- oder Restwasserschale aufgenommen.

Je mehr sich der Auffangbehälter unter dem Getränkeauslauf füllt, um so größer wird die Gefahr, dass Spritzer einer basischen Reinigungslösung oder einer sauren Entkalkerlösung die Front des Getränkeautomaten, das Küchenmöbel oder gegebenenfalls eine vor dem Automaten stehende Person verätzen, zumindest aber verschmutzen. Zudem können verdampfende Reinigungs- und/oder Spüllösungen beim Einatmen ein Stechen in der Nase und eine damit einhergehende Reizung der Nasenschleimhaut sowie der Augen bedingen. Fehlt ein Auffangbehälter unter dem Getränkeauslauf ist diese Gefahr umso größer, je weiter der Getränkeauslauf vom Tropfblech bzw. von der Tropf- oder Restwasserschale beabstandet ist.

Nachteilig an manuellen oder automatisierten Reinigungszyklen gemäß dem Stand der Technik ist auch der visuelle Eindruck, den eine Bedienperson oder ein Kunde dadurch erhält, dass eine bräunlich gefärbte, mit Partikeln und Schwebstoffen durchsetzte Lösung aus dem Getränkeautomaten ausgespült wird.

Aufgabe der vorliegenden Erfindung ist es daher die Nachteile eines Reinigungszykluses eines Getränkeautomaten, insbesondere Kaffeevollautomaten zu vermeiden, und insbesondere einen gattungsgemäßen Getränkeautomaten bereitzustellen, mit dem ein automatischer, zumindest aber ein halbautomatischer Reinigungszyklus durchgeführt werden kann.

Gelöst wird die Aufgabe, ausgehend von einem gattungsgemäßen Getränkeautomaten, insbesondere Kaffeevollautomaten, mit einem in Betriebsstellung ausladend vor der Gehäusefront angeordneten Getränkeauslauf mit zumindest einem Auslassteil für ein Getränk und zumindest einem weiteren Auslassteil für Wasser, Dampf, Milch und/oder Milchschaum, der dadurch gekennzeichnet ist, dass der Getränkeauslauf um eine parallel zur Gehäusefront verlaufende horizontale Achse schwenkgelagert ist, und in einer Reinigungsstellung *vollständig* in die Gehäusefront eingeschwenkt ist, *dergestalt, dass Gehäusefront und Getränkeauslauf (1) bündig miteinander abschließen.*

Durch den erfindungsgemäß in einer Reinigungsstellung eingeschwenkten Getränkeauslauf dergestalt, dass das zumindest eine Auslassteil für das Getränk und das zumindest eine weitere Auslassteil für Wasser, Dampf, Milch und/oder Milchschaum nahezu horizontal, oberhalb der Restwasserschale im Inneren des Getränkeautomaten angeordnet ist, wird in vorteilhafterweise ein Verspritzen oder ein Verdampfen einer Reinigungslösung während eines Reinigungszyklus vermieden. Daneben wird auch der unerwünschte visuelle Eindruck, den eine Bedienperson oder ein Kunde während eines Reinigungszyklus erfährt, dadurch vermieden, dass die Reinigung verborgen im Inneren des Getränkeautomaten abläuft. Der Benutzer muss bei einer manuellen Durchführung eines Reinigungszyklus keinen Auffangbehälter unter das Auslassteil stellen, da die über das zumindest eine Auslassteil abgegebenen Reinigungs-und/oder Spüllösungen mittel- oder unmittelbar in die Restwasserschale abgegeben werden.

In einer bevorzugten Weiterbildung ist der Getränkeauslauf in einer Reinigungsstellung und in einer Ruhestellung in die Gehäusefront eingeschwenkt. Eine Ruhestellung kann manuell und/oder automatisch eingenommen werden. So befindet sich der erfindungsgemäße Getränkeautomat beispielsweise in Ruhestellung, wenn für eine bestimmte Zeit kein Getränk mehr bezogen wurde, wenn der Standby-Modus eingenommen wurde, wenn dieser manuell eingeleitet wurde, oder nach dem Ausschalten und/oder nach der Trennung vom Netz.

Vorzugsweise ist der erfindungsgemäße Getränkeauslauf in einer Reinigungs- und/oder in einer Ruhestellung vollständig in die Gehäusefront eingeschwenkt, dergestalt, dass Gehäusefront und Getränkeauslauf bündig miteinander abschließen.

Ein Einschwenken in die Front eines Kaffeevollautomaten hat neben dem technischen Effekt auch den Vorteil, dass ein nicht benötigter ausladender Kaffeeauslauf verstaubar wird. Neben der Einsparung von Stellplatz auf der heimischen Anrichte ist auch der Transport eines Getränkeautomaten günstiger, da weniger, insbesondere schützendes Verpackungsmaterial benötigt wird.

In einer weiteren bevorzugten Ausführungsform erfolgt das Einschwenken des erfindungsgemäßen Getränkeauslaufs motorisch. In vorteilhafter Weise kann dadurch eine automatisierte Reinigung, beispielsweise nach einer bestimmten Zeit, durchgeführt werden. Eine derartige Reinigung ist insbesondere dann nötig, wenn der Getränkeauslauf neben dem zumindest einen Auslassteil für das Getränk zumindest ein weiteres Auslassteil für Milch und/oder Milchschaum aufweist. Ein milchführendes Leitungssystem in dem Getränkeauslauf, das über einen seitlich am Auslauf angedockten Schlauch gespeist wird, sollte nämlich regelmäßig nach dem Kontakt mit Milch mit zumindest Frischwasser gespült werden.

Zudem kann durch das motorische Einschwenken des erfindungsgemäßen Getränkeauslaufs der seitlich am Auslauf angedockte Schlauch zum Milchbehälter automatisiert, beispielsweise durch Scherung, getrennt werden und schließlich im eingeschwenkten Zustand der Milchleitungsanschluss zugänglich gemacht werden. Dies ermöglicht in vorteilhafter Weise eine vollständige Spülung bzw. Reinigung des milchführenden Leitungssystems. Die Gefahr, dass die Lösung verspritzt besteht dabei praktisch nicht mehr, da sich die zumindest eine Auslassöffnung unmittelbar über der Restwasserschale befindet.

In einer weiteren bevorzugten Ausführungsform ist das Auslassteil bzw. sind die Auslassteile nach dem Einschwenken an zumindest einer Kupplungseinrichtung angedockt. Die Kupplungseinrichtung ist beispielsweise als elastische Aufnahme ausgebildet, die ein aus einer Ebene hervortretendes Auslassteil aufnimmt und eine dichte, fluidleitende Verbindung auszubilden vermag. Stromab der Kupplungseinrichtung ist ein Schlauch, eine Leitung oder dergleichen vorgesehen, dessen Ende bis auf den Boden der Restwasserschale reicht. Ein gegebenenfalls in der Restwasserschale vorhandener Flüssigkeitsspiegel überdeckt das Ende des Schlauchs oder der Leitung. Dies hat den Vorteil, dass Spül- und/oder Reinigungslösungen unmittelbar in die Restwasserschale, gegebenenfalls unter einen Flüssigkeitsspiegel, abgegeben werden, was ein Verdampfen und Verspritzen der Lösung verhindert. Dadurch kann zusätzlich verhindert werden, dass reizende Dämpfe aufsteigen.

Prinzipiell sind verschiedene Arten einer Schwenklagerung des Getränkeauslaufs möglich. So kann der Auslauf beispielsweise über zumindest zwei Scharniere um eine zumindest teilweise innerhalb des Getränkeautomaten verlaufende Scharnierachse schwenkgelagert sein. Bevorzugt ist jedoch eine Schwenklagerung über eine Kulissenführung dergestalt, dass in zwei voneinander unabhängigen, getrennten Kulissen je ein Kulissenstein zwangsgeführt wird. Im Folgenden wird diese bevorzugte Ausführungsform anhand von vier Figuren näher erläutert, wobei sich gleiche Bezugszeichen auf gleiche oder ähnliche oder funktional gleiche Bauteile beziehen..

Dabei zeigt, jeweils rein schematisch,
- Figur 1: den grundsätzlichen Aufbau eines erfindungsgemäßen Getränkeauslaufs,
- Figur 2: die geschlossene, d.h. die eingeschwenkte Position des Getränkeauslaufs,
- Figur 3: die offene, d.h. ausgeschwenkte Position des Getränkeauslaufs in einer maximalen Höhenverschiebung,
- Figur 4: die offene, d.h. ausgeschwenkte Position des Getränkeauslaufs in einer mittleren Höhenverschiebung und
- Figur 5: die offene, d.h. ausgeschwenkte Position des Getränkeauslaufs in einer maximalen Höhenverschiebung.

Der erfindungsgemäße Getränkeauslauf 1 hat zumindest einen Zu- und zumindest einen Ablauf (nicht in der Figur). Der Ablauf erfolgt dabei über zumindest ein Auslassteil 2 für das Getränk und gegebenenfalls über zumindest ein weiteres Auslassteil für Wasser, Dampf, Milch und/oder Milchschaum. In einer Betriebsstellung ist das bzw. sind die Auslassteil(e) vertikal oberhalb einer Abstellfläche (Tropfblech) 3 für Trinkgefäße angeordnet, so dass das Getränk bzw. Wasser, Dampf, Milch und/oder Milchschaum von oben in ein Trinkgefäß abgegeben werden kann. Unterhalb der Abstellfläche befindet sich eine Restwasserschale 4, die sich bis in das Innere des Getränkeautomaten erstreckt.

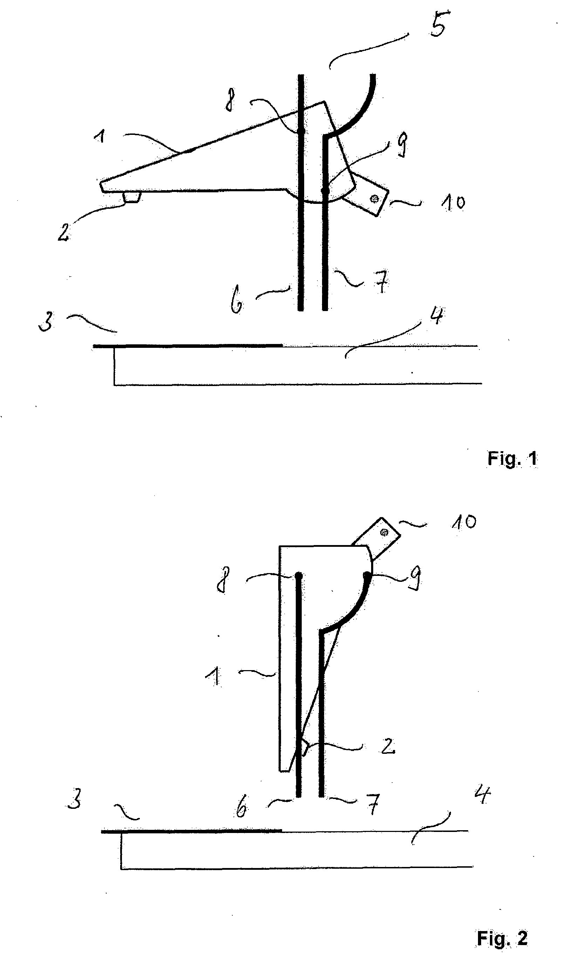

Gemäß Figur 1 unterliegt der erfindungsgemäße Getränkeauslauf 1 einer Kulissenführung 5. In zwei voneinander unabhängigen, getrennten Kulissen 6, 7 wird je ein Kulissenstein 8, 9 zwangsgeführt. Die Kulissensteine 8, 9 sind seitlich am Getränkeauslauf 1 ausgebildet. Ferner ist an der Rückseite des Getränkeauslaufs 1 ein Angriffspunkt 10 für ein Einschwenken und eine Höhenverschiebung vorgesehen.

Das Einschwenken und die Höhenverschiebung können manuell, beispielsweise über einen mit einer Spindel in Wirkverbindung stehenden Drehknauf an der Oberseite des Getränkeautomaten, oder motorisch, beispielsweise über eine von einem Motor antreibbare Spindel erfolgen.

Durch eine Rotationsbewegung der Spindel wird ein Mitnehmer in Abhängigkeit der Drehrichtung entweder vertikal nach oben oder vertikal nach unten verfahren. Der Mitnehmer ist mit dem Angriffspunkt 10 verbunden und derart ausgebildet, dass er eine im Wesentlichen senkrechte Krafteinwirkung in Abhängigkeit der Rotationsrichtung der Spindel auf den Angriffspunkt 10 auszuüben vermag.

Die Kulissenführung erlaubt also sowohl ein Einschwenken als auch eine Höhenverschiebung mit nur einem Motor zu realisieren.

Bedingt durch die Kulissenführung 5 sind verschiedene Positionen des Getränkeauslaufs 1 in Bezug auf eine Höhenverschiebung und in Bezug auf eine parallel zur Gehäusefront des Getränkeautomaten verlaufende Schwenkachse möglich. Der Übergang zwischen den einzelnen Positionen erfolgt über eine im Wesentlichen senkrechte Krafteinwirkung auf den Angriffspunkt 10. Dabei ist die jeweilige Position der Kulissensteine 8, 9 sowie die Richtung der Krafteinwirkung entscheidend dafür, ob der Getränkeauslauf 1 eine lineare Bewegung oder eine Schwenkbewegung ausführt.

Figur 2 zeigt eine Endposition, in der der Getränkeauslauf 1 vollständig in die Gehäusefront des Getränkeautomaten eingeschwenkt ist. Erfindungsgemäß werden Reinigungs- und/oder Spülzyklen in dieser Position des Getränkeauslaufs manuell oder automatisch durchgeführt.

Eine im Wesentlichen senkrecht nach unten gerichtete Kraft, die auf den Angriffspunkt 10 einwirkt, erzwingt eine nach oben gerichtete Schwenkbewegung des Getränkeauslaufs 1 auf einer parallel zur Gehäusefront verlaufenden horizontalen Achse. Dabei rotiert der Kulissenstein 8 in der Kulisse 6 ortsfest um eine horizontale Achse, während der Kulissenstein 9 in der Kulisse 7 nach unten geführt wird. Demnach erfolgt zunächst keine Höhenverschiebung des Getränkeauslaufs 1, da der Kulissenstein 9 in der Kulisse 7 knapp unterhalb des Scheitelpunktes einer Kreisbahn liegt.

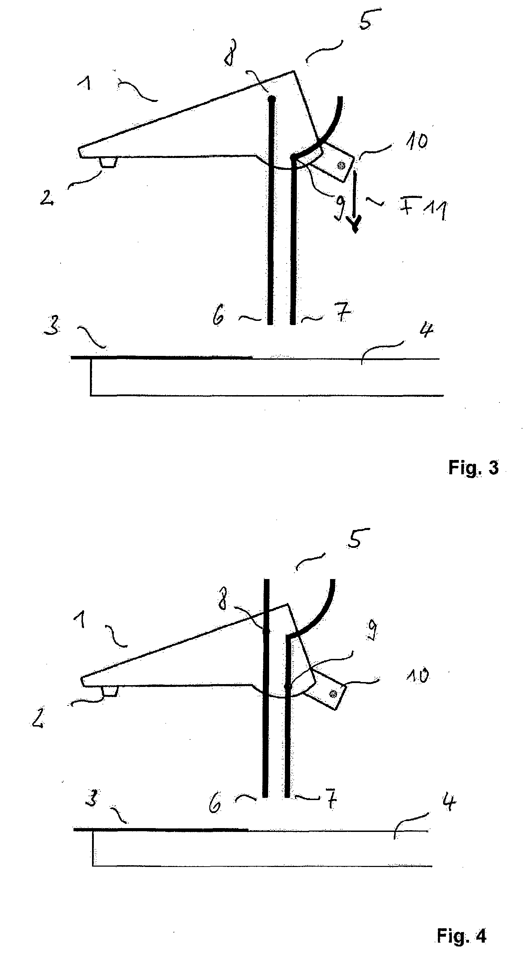

Figur 3 zeigt eine Übergangsposition des Getränkeauslaufs 1 von einer Schwenkbewegung in eine Höhenverschiebung, dergestalt, dass eine im Wesentlichen senkrecht nach unten gerichtete Kraft 11, die auf den Angriffspunkt 10 einwirkt, den Auslauf 1 vertikal verfährt.

Sobald der Kulissenstein 9 das Ende der Kreisbahn in der Kulisse 7 passiert, stoppt die Schwenkbewegung des Getränkeauslaufs 1. Eine im Wesentlichen senkrecht nach unten gerichtete Kraft 11, bewirkt eine nach unten gerichtete Linearverschiebung beider Kulissensteine 8, 9, was zu einer Höhenverschiebung des Auslaufs 1 führt. Der Übergang einer Schwenk- in eine Linearbewegung ist durch den oberen Anschlag der Kulisse 6 definiert. Bei einer im Wesentlichen senkrecht nach unten gerichteten kontinuierlichen Krafteinwirkung erfolgt der Übergang der Schwenk- in die Linearbewegung fließend.

Figur 4 zeigt einen erfindungsgemäßen Getränkeauslauf 1 während des Bezugs eines Getränks. Je nachdem ob ein großes oder ein kleines Trinkgefäß unter das Auslassteil 2 positioniert wurde, kann der Auslauf 1 nach oben oder unten höhenverschoben werden. Während einer linearen Höhenverschiebung wirken die Kulissensteine 8, 9 in den Kulissen 6, 7 stabilisierend, da sie durch den Höhenversatz zueinander ein Drehmoment aufzunehmen vermögen. Das Drehmoment wird durch den an der Rückseite des Getränkeauslaufs liegenden Angriffspunkt 10 für die Kraft 11 erzeugt.

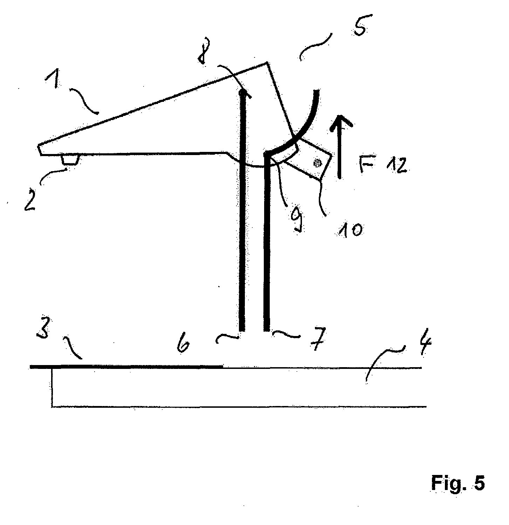

Figur 5 zeigt eine Endposition, in der der Getränkeauslauf maximal nach oben höhenverschoben ist. Eine im Wesentlichen senkrecht nach oben gerichtete Kraft 12, die auf den Angriffspunkt 10 einwirkt, erzwingt eine nach unten gerichtete Schwenkbewegung des Getränkeauslaufs 1 auf einer parallel zur Gehäusefront verlaufenden horizontalen Achse, da der obere Anschlag der Kulisse 6 erreicht wurde und eine weitere Höhenverschiebung nicht länger möglich ist. Dabei rotiert der Kulissenstein 8 in der Kulisse 6 ortsfest um eine horizontale Achse, während der Kulissenstein 9 in der Kulisse 7 auf der Kreisbahn nach oben geführt wird. Bei einer im Wesentlichen senkrecht nach oben gerichteten kontinuierlichen Krafteinwirkung 11 erfolgt der Übergang der Linear- in die Schwenkbewegung fließend.

Der Getränkeauslauf eignet sich insbesondere für hochpreisige Getränkeautomaten, insbesondere Kaffeevollautomaten, mit einem automatischen, zumindest aber einem halbautomatischen Reinigungszyklus.

### Bezugszeichenliste

- 1: Getränkeauslauf
- 2: Auslassteil
- 3: Abstellfläche (Tropfblech)
- 4: Restwasserschale
- 5: Kulissenführung
- 6: Kulisse
- 7: Kulisse
- 8: Kulissenstein
- 9: Kulissenstein
- 10: Angriffspunkt
- 11: Kraft, nach unten gerichtet
- 12: Kraft, nach oben gerichtet

## Patentansprüche

1. Getränkeautomat, insbesondere Kaffeevollautomat, mit einem in Betriebsstellung ausladend vor der Gehäusefront angeordneten Getränkeauslauf (1) mit zumindest einem Auslassteil (2) für ein Getränk und zumindest einem weiteren Auslassteil für Wasser, Dampf, Milch und/oder Milchschaum, **dadurch gekennzeichnet, dass** der Getränkeauslauf (1) um eine parallel zur Gehäusefront verlaufende horizontale Achse schwenkgelagert ist und in einer Reinigungsstellung vollständig in die Gehäusefront eingeschwenkt ist, dergestalt, dass Gehäusefront und Getränkeauslauf (1) bündig miteinander abschließen.

2. Getränkeautomat nach Anspruch 1, **dadurch gekennzeichnet, dass** das zumindest eine Auslassteil (2) für das Getränk und das zumindest eine weitere Auslassteil für Wasser, Dampf, Milch und/oder Milchschaum in der Reinigungsstellung nahezu horizontal oberhalb einer Restwasserschale (4) im Inneren des Getränkeautomaten angeordnet ist.

3. Getränkeautomat nach Anspruch 1 oder 2, **dadurch gekennzeichnet, dass** das Einschwenken motorisch oder manuell erfolgt.

4. Getränkeautomat nach einem der vorstehenden Ansprüche, **dadurch gekennzeichnet, dass** das Auslassteil (2) bzw. die Auslassteile nach dem Einschwenken an zumindest einer Kupplungseinrichtung angedockt ist bzw. sind.

5. Getränkeautomat nach einem der vorstehenden Ansprüche, **dadurch gekennzeichnet, dass** die Schwenklagerung und eine Höhenverschiebung über eine Kulissenführung (5) erfolgt, dergestalt, dass In zwei voneinander unabhängigen, getrennten Kulissen (6, 7) je ein Kulissenstein (8, 9) zwangsgeführt wird.

6. Getränkeautomat nach Anspruch 5, **dadurch gekennzeichnet, dass** die Kulissensteine (8, 9) seitlich am Getränkeauslauf (1) ausgebildet sind, und an der Rückseite des Getränkeauslaufs (1) ein Angriffspunkt (10) vorgesehen ist.

7. Getränkeautomat nach einem der vorstehenden Ansprüche, **dadurch gekennzeichnet, dass** Schwenklagerung und Höhenverschiebung über die Rotationsbewegung einer mit dem Angriffspunkt (10) in Wirkverbindung stehenden Spindel erfolgt.

8. Getränkeautomat nach einem der vorstehenden Ansprüche, **dadurch gekennzeichnet. dass** der Getränkeauslauf (1) in einer Reinigungs- und in einer Ruhestellung in die Gehäusefront eingeschwenkt ist.

## Claims

1. Beverage machine, in particular a fully automatic coffee machine, with a beverage outlet (1) which is arranged in front of the housing front and protrudes in the operating position, said beverage outlet (1) comprising at least one outlet part (2) for a beverage and at least one further outlet part for water, steam, milk and/or milk froth, **characterised in that** the beverage outlet (1) is mounted in such a way that it is able to swivel about a horizontal axis running parallel to the housing front and is rotated completely inside the housing front in a cleaning position, in such a way that the housing front and beverage outlet (1) close flush with one another.

2. Beverage machine according to claim 1, **characterised in that** the at least one outlet part (2) for the beverage and the at least one further outlet part for water, steam, milk and/or milk froth is arranged virtually horizontally above a compartment for remaining water (4) inside the beverage machine in the cleaning position.

3. Beverage machine according to claim 1 or 2, **characterised in that** the inward rotation is carried out in a motor-driven or manual manner.

4. Beverage machine according to one of the preceding claims, **characterised in that** following the inward rotation the outlet part (2) or the outlet location is or are anchored to at least one coupling device.

5. Beverage machine according to one of the preceding claims, **characterised in that** the swivelling and a height adjustment take place via a sliding block guide (5) in such a way that in each of two guide members (6, 7) that are independently separated from one another, a sliding block (8, 9) is positively guided.

6. Beverage machine according to claim 5, **characterised in that** the sliding blocks (8, 9) are embodied on the side of the beverage outlet (1) and a point of action (10) is provided on the rear side of the beverage outlet (1).

7. Beverage machine according to one of the preceding claims, **characterised in that** the swivelling and height adjustment take place by means of the rotational movement of a spindle, which spindle is in operative connection with the point of action (10).

8. Beverage machine according to one of the preceding claims, **characterised in that** the beverage outlet (1) is rotated inside the housing front in a cleaning position and a resting position.

## Revendications

1. Distributeur de boissons, notamment distributeur automatique de café, comprenant une sortie de boisson (1) disposée devant la face avant d'appareil de manière à décharger en position de fonctionnement, comprenant au moins une partie de sortie (2) pour une boisson et au moins une autre partie de sortie pour de l'eau, de la vapeur, du lait et/ou de la mousse de lait, **caractérisé en ce que** la sortie de boisson (1) est logée de manière pivotante autour d'un axe horizontal s'étendant parallèlement à la face avant d'appareil et est entièrement rentrée dans la face avant d'appareil dans une position de nettoyage, de telle manière que la face avant d'appareil et la sortie de boisson (1) se raccordent entre elles au même niveau.

2. Distributeur de boissons selon la revendication 1, **caractérisé en ce que** l'au moins une partie de sortie (2) est disposée pour la boisson et **en ce que** l'au moins autre partie de sortie est disposée pour de l'eau, de la vapeur, du lait et/ou de la mousse de lait quasi horizontalement au-dessus d'une coupelle d'eau restante (4) à l'intérieur du distributeur de boisson, dans la position de nettoyage.

3. Distributeur de boissons selon la revendication 1 ou 2, **caractérisé en ce que** le pivotement est réalisé par moteur ou manuellement.

4. Distributeur de boissons selon l'une quelconque des revendications précédentes, **caractérisé en ce que** la partie de sortie (2) resp. l'endroit de sortie, après le pivotement, est amarrée resp. sont amarrés à au moins un dispositif d'accouplement.

5. Distributeur de boissons selon l'une quelconque des revendications précédentes, **caractérisé en ce que** le logement de pivotement et un déplacement en hauteur sont réalisés par l'intermédiaire d'un guidage de coulisse (5) de telle manière que, dans deux coulisses (6, 7) séparées, autonomes l'une de l'autre, respectivement un coulisseau (8, 9) est guidé de manière forcée.

6. Distributeur de boissons selon la revendication 5, **caractérisé en ce que** les coulisseaux (8, 9) sont réalisés latéralement sur la sortie de boisson (1), et **en ce qu'**un point d'attaque (10) est ménagé au dos de la sortie de boisson (1).

7. Distributeur de boissons selon l'une quelconque des revendications précédentes, **caractérisé en ce que** le logement de pivotement et un déplacement en hauteur sont réalisés par l'intermédiaire d'un mouvement de rotation d'une broche coopérant avec le point d'attaque (10).

8. Distributeur de boissons selon l'une quelconque des revendications précédentes, **caractérisé en ce que** la sortie de boisson (1), dans une position de nettoyage et dans une position de repos, est rentrée dans la face avant d'appareil.
